# FASCICULE DE BREVET EUROPEEN

(11) **EP 4 003 769 B1**
(45) Date de publication et mention de la délivrance du brevet: **08.01.2025**
(21) Numéro de dépôt: 20742351.8
(22) Date de dépôt: 16.06.2020
(51) Int. Cl.: B60K 11/08, F01P 7/10

(54) **DISPOSITIF DE REGULATION D'UN FLUX D'AIR D'UN VEHICULE AUTOMOBILE**
VORRICHTUNG ZUR REGELUNG EINES LUFTSTROMS EINES KRAFTFAHRZEUGES
DEVICE FOR REGULATING AN AIR FLOW OF A MOTOR VEHICLE

(30) Priorité: 22.07.2019 FR 1908294
(43) Date de publication de la demande: 01.06.2022
(73) Titulaire: VALEO SYSTEMES THERMIQUES, 78320 Le Mesnil Saint-Denis (FR)
(72) Inventeur: GERBER, Sylvain, 78322 LE MESNIL SAINT DENIS CEDEX (FR); MITIDIERI, Enzo, 78322 LE MESNIL SAINT DENIS CEDEX (FR)
(74) Mandataire: Valeo Systèmes Thermiques
(86) Numéro de dépôt international: PCT/FR2020/051037
(87) Numéro de publication internationale: WO 2021/014059

(56) Documents cités:
- DE-A1- 102011 009 778
- DE-A1- 102014 113 067
- FR-A1- 3 063 338
- FR-A1- 3 079 917
- GB-A- 119 375
- KR-A- 20110 002 149

## Description

L'invention concerne un dispositif de régulation d'un flux d'air circulant au sein d'un échangeur de chaleur pour véhicule automobile et un module de refroidissement muni d'un tel dispositif. Elle est en particulier destinée à l'équipement d'une face avant de véhicule automobile.

Il est connu d'utiliser des volets pilotés par un actionneur en face avant de véhicule afin de réduire le coefficient de traînée et aussi d'améliorer les performances de refroidissement et de climatisation. Un tel système est le plus souvent désigné par l'acronyme AGS provenant de l'expression de langue anglaise « Active Grille Shutter ». L'AGS est de préférence installé au niveau d'une calandre du véhicule automobile. En position d'ouverture de l'entrée d'air, l'air peut circuler à travers la calandre et participer notamment au refroidissement du moteur du véhicule automobile. En position d'obturation de l'entrée d'air, l'air ne pénètre pas via la calandre ce qui réduit la traînée et permet ainsi de réduire la consommation de carburant et l'émission de dioxyde de carbone. L'AGS permet donc de réduire la consommation d'énergie et la pollution lorsque le moteur n'a pas besoin d'être refroidi par l'air extérieur.

Dans certains cas, il n'est pas possible de positionner un AGS au niveau de la calandre, devant les échangeurs, à cause d'un environnement inadapté, d'un souhait de client ou autre.

Il est connu des modules de refroidissement pour véhicule automobile comprenant deux échangeurs de chaleur. Un premier échangeur de chaleur a pour fonction de refroidir un circuit annexe du véhicule, tel qu'un dispositif de climatisation ou un dispositif de refroidissement d'air de suralimentation. Un deuxième échangeur de chaleur est nécessaire au refroidissement du moteur du véhicule. Les échangeurs de chaleur sont disposés en face avant du véhicule, assemblés et alignés en série pour être successivement traversés par le flux d'air entrant à travers la calandre du véhicule. Ils comprennent typiquement un faisceau d'échange de chaleur, comprenant des tubes dans lesquels circule le fluide à refroidir et traversé par l'air provenant de la calandre.

Afin de dissocier le refroidissement des deux échangeurs de chaleur et optimiser le gain aérodynamique de chaque échangeur de chaleur, le déposant a récemment proposé un dispositif de régulation du flux d'air destiné à circuler dans les échangeurs de chaleur dans une demande de brevet non publiée du déposant. Le dispositif de régulation comprend deux rideaux montés dans un cadre et déplaçables alternativement en translation entre deux positions ouverte et fermée. En se déplaçant entre ces deux positions, les rideaux permettent au dispositif de régulation de laisser passer ou obturer alternativement le flux d'air traversant la calandre du véhicule automobile. Le déplacement des rideaux s'effectue au moyen d'un système de transmission qui guide le mouvement desdits rideaux en translation, ainsi qu'un actionneur induisant un mouvement au système de transmission.

Un tel dispositif de régulation est connu de FR3063338A1.

L'invention a ainsi pour objet, un dispositif de régulation d'un flux d'air destiné à circuler à travers un échangeur de chaleur pour véhicule automobile, le dispositif comprenant deux rideaux aptes à se déplacer selon une direction d'ouverture/fermeture, entre une position fermée obturant le passage du flux d'air et une position ouverte laissant passer le flux d'air, ce dispositif de régulation comportant un système de transmission agencé pour guider le mouvement desdits rideaux, ainsi qu'un actionneur induisant un mouvement au système de transmission, ce système de transmission comportant deux arbres d'enroulement chacun pour l'enroulement et le déroulement de l'un des rideaux, ce système de transmission comportant en outre au moins une courroie actionnable en mouvement et agencée pour faire tourner l'un au moins des arbres d'enroulement à la fois dans le sens d'un enroulement du rideau et dans le sens d'un déroulement du rideau, caractérisé en ce que chaque arbre d'enroulement comporte un pignon denté agencé pour coopérer avec la courroie qui est crantée de sorte que le mouvement de l'un des arbres d'enroulement, notamment un mouvement provoqué par l'actionneur, soit transmis à l'autre arbre d'enroulement,

Selon l'un des aspects de l'invention, l'actionneur est agencé pour faire tourner l'un des arbres d'enroulement sélectivement dans un sens d'enroulement du rideau ou dans un sens de déroulement du rideau.

Selon l'un des aspects de l'invention, le dispositif de régulation comporte deux courroies chacune à l'une des extrémités des deux arbres d'enroulement de sorte que chaque courroie est associée à deux pignons dentés des deux arbres d'enroulement, ces deux courroies étant agencées pour être en mouvement synchronisé l'une par rapport à l'autre.

Selon l'un des aspects de l'invention, le dispositif comporte au moins un organe d'entraînement solidaire d'un bord libre du rideau et agencé pour se déplacer en même temps que la courroie pour accompagner le rideau lors de son enroulement ou de son déroulement de manière à maintenir le rideau à plat.

Selon l'un des aspects de l'invention, l'organe d'entrainement comporte des éléments de fixation agencés pour être fixés aux courroies de sorte que l'organe d'entrainement soit solidaire des deux courroies.

Selon l'un des aspects de l'invention, chaque élément de fixation est pincé sur la courroie associée, notamment pincé sur une bande formant la courroie.

Selon l'un des aspects de l'invention, pour chaque courroie, l'élément de fixation associé à l'un des rideaux est fixé sur un premier brin de la courroie entre les deux arbres d'enroulement et l'autre élément de fixation associé à l'autre des rideaux est fixé sur un deuxième brin de la courroie qui est opposé au premier brin de sorte que les deux éléments de fixation puissent être déplacés en directions opposées, soit en s'éloignant l'un de l'autre soit en se rapprochant l'un de l'autre.

Selon l'un des aspects de l'invention, l'organe d'entrainement comporte une tige avec à chaque extrémité de la tige l'un des éléments de fixation, et la tige étant placée le long d'un bord libre du rideau associé. Notamment lorsque les deux rideaux sont en positon fermée, les deux tiges viennent en appui l'une contre l'autre. Les éléments de fixation sont notamment fixés sur la courroie sans possibilité de mouvement relatif par rapport à cette courroie.

Selon l'un des aspects de l'invention, chaque élément de fixation est réalisé en matière plastique.

Ainsi pour ouvrir ou fermer le rideau, ce rideau est entrainé à la fois par l'arbre d'enroulement et par l'organe d'entrainement, aux deux extrémités. L'action simultanée aux deux extrémités du rideau permet de maintenir ce rideau tendu comme souhaité, évitant ainsi des fronces ou plis et d'éventuels coincements du rideau. L'invention permet ainsi de s'affranchir, de manière avantageuse, d'un ressort de rappel qui pourrait être volumineux et devoir consommer une partie du couple développé par l'actionneur. L'invention permet en outre de transmettre de manière uniforme le couple de l'actionneur aux deux arbres d'enroulement des deux rideaux. Lors de l'ouverture du rideau, le rideau s'enroule autour de son arbre d'enroulement et le mouvement de la courroie ramène l'extrémité libre du rideau vers cet arbre d'enroulement via l'organe d'entrainement.

Selon l'un des aspects de l'invention, le sens pour enrouler le rideau autour de l'arbre d'enroulement est le même sur les deux arbres. Ceci est permis par le fait que les rideaux s'enroulent de façon opposée sur les deux arbres

Ainsi la courroie permet la rotation de l'un des arbres d'enroulement simultanément à la mise en mouvement en translation de l'organe d'entrainement du rideau via les éléments de fixation.

L'invention a encore pour objet un procédé pour ouvrir ou fermer le rideau d'un dispositif selon l'une des revendications précédentes, ce rideau est entrainé à la fois par l'arbre d'enroulement et par l'organe d'entrainement, respectivement aux deux extrémités, notamment sans intervention d'un ressort de rappel supplémentaire

Il est entendu que l'ensemble des caractéristiques et configurations précédemment ne sont en rien limitatives. D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés, sur lesquels :
La figure 1 [Fig. 1] illustre de façon schématique, en vue de côté, la face avant d'un véhicule comprenant un module de refroidissement équipé d'un dispositif de régulation ne faisant pas partie de l'invention;

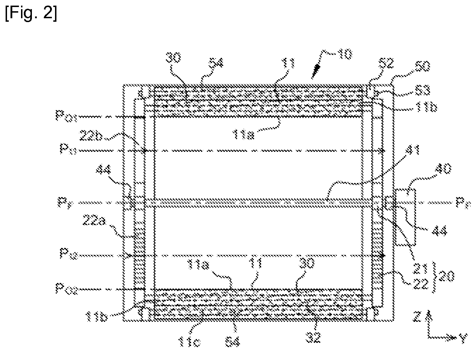

La figure 2 [Fig. 2] illustre, en vue schématique de face, un dispositif de régulation ne faisant pas partie de l'invention, les rideaux sont en position ouverte,

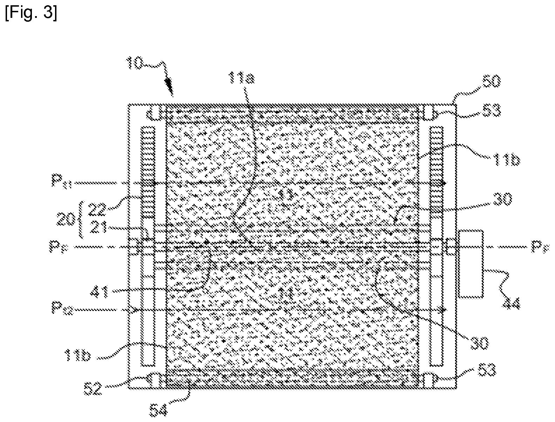

La figure 3 [Fig. 3] illustre, en vue schématique de face, un dispositif de régulation selon l'invention, les rideaux sont en position fermée,

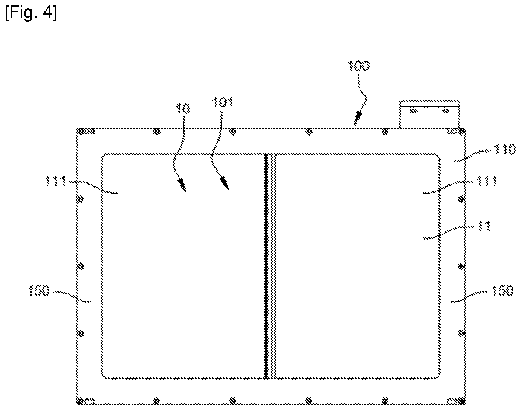

La figure 4 [Fig. 4] est une représentation schématique d'un autre dispositif de régulation ne faisant pas partie de l'invention,
La figure 5 [Fig. 5] est une représentation schématique des éléments du dispositif de la figure 4,
La figure 6 [Fig. 6] est une représentation schématique d'un dispositif selon un exemple de réalisation de l'invention, en positon fermée,
La figure 7 [Fig. 7] est une représentation schématique d'un dispositif selon la figure précédente, en positon ouverte,

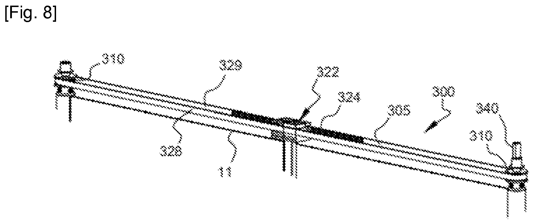

La figure 8 [Fig. 8] est une représentation schématique du dispositif selon la figure 6, en vue grossie, en positon fermée.

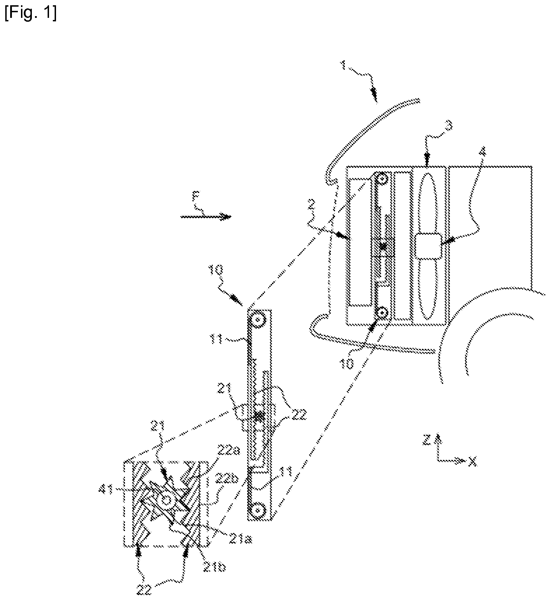

La figure 1 illustre un dispositif de régulation 10 d'un flux d'air F ainsi qu'un module de refroidissement 1, selon une vue de côté. Le module de refroidissement 1 s'étend en profondeur selon une direction X destinée à correspondre à l'axe longitudinal du véhicule équipé. Le flux d'air F s'écoule sensiblement parallèlement à la direction X. Le module est configuré pour être fixé sur un support, tel qu'un châssis du véhicule.

Le module de refroidissement 1 comprend un échangeur de chaleur amont 2 (situé à gauche sur la fig. 1) et un échangeur de chaleur aval 3 (situé à droite sur la fig. 1) agencés en série selon le sens d'écoulement du flux d'air F les traversant. Autrement dit, le module de refroidissement 1 est configuré pour être disposé sur son support, de sorte que l'échangeur de chaleur amont 2 soit traversé par le flux d'air F en premier et l'échangeur de chaleur aval 3 en deuxième.

L'échangeur de chaleur amont 2 est un radiateur de refroidissement, dit basse température, servant à refroidir un liquide de refroidissement d'une boucle d'échange de chaleur, dite basse température, comprenant, notamment, un condenseur de climatisation et/ou un refroidisseur d'air de suralimentation. L'échangeur de chaleur aval 3 est, par exemple, un radiateur de refroidissement haute température destiné à refroidir un liquide de refroidissement d'une boucle d'échange de chaleur comprenant un moteur du véhicule. L'air qui traverse cet échangeur aval 3 refroidit le liquide de refroidissement du moteur.

Chaque échangeur 2, 3 comprend, par exemple, un faisceau d'échange de chaleur et des chambres de collecte disposées latéralement de part et d'autre du faisceau (non illustré). Le faisceau est traversé par le flux d'air F. Il comprend un ensemble de tubes parallèles les uns aux autres, débouchant dans les chambres de collecte, pour la circulation du liquide de refroidissement (non illustré).

Le module de refroidissement 1 est avantageusement configuré pour autoriser un écoulement d'air de manière sensiblement étanche entre lesdits échangeurs de chaleur 2, 3, c'est-à-dire que l'échangeur de chaleur amont 2 et l'échangeur de chaleur aval 3 sont assemblés l'un à autre de sorte que l'échangeur de chaleur aval 3 ne soit pas directement traversé par de l'air venant de l'extérieur du module. Autrement dit, le flux d'air F traversant l'échangeur de chaleur aval 3 est issu du flux d'air traversant l'échangeur de chaleur amont 2. Pour cela, le module de refroidissement 1 peut, par exemple, comprendre des moyens d'étanchéité permettant de guider l'intégralité du flux d'air ayant traversé l'échangeur de chaleur amont 2 vers l'échangeur de chaleur aval 3 sans perte de débit d'air. Ces moyens d'étanchéité, non illustrés, peuvent par exemple comprendre une gaine agencée entre les deux échangeurs de chaleur 2,3.

Pour faciliter le passage du flux d'air dans le module de refroidissement 1, notamment lorsque le véhicule est à l'arrêt, le module comprend avantageusement un groupe moto-ventilateur 10 apte à faire circuler l'air dans le module de refroidissement 1. Comme illustré sur la figure 1, le groupe moto-ventilateur 4 est ici disposé en aval de l'échangeur de chaleur aval 3, le groupe moto-ventilateur 4 étant configuré pour aspirer l'air depuis une entrée d'air du véhicule, qui est de préférence définie par sa calandre.

Le module de refroidissement 1 comprend, en outre, un dispositif de régulation 10 du flux d'air agencé préférentiellement entre l'échangeur de chaleur amont 2 et l'échangeur de chaleur aval 3. Le dispositif de régulation 10 présente une faible épaisseur dans la profondeur du module de refroidissement. Le dispositif de régulation 10 contrôle le passage du flux d'air F de l'échangeur de chaleur amont 2 vers l'échangeur de chaleur aval 3 par l'intermédiaire de stores ou rideaux 11 enroulables/déroulables.

En variante, le module de refroidissement 1 peut comprendre un unique échangeur de chaleur, par exemple un radiateur de refroidissement, ledit dispositif de régulation 10 étant alors agencé en amont ou en aval dudit échangeur de chaleur. Dans une telle configuration, le flux d'air F traversant l'échangeur de chaleur est issu du flux d'air F traversant le dispositif de régulation ou débouche sur ledit dispositif de régulation.

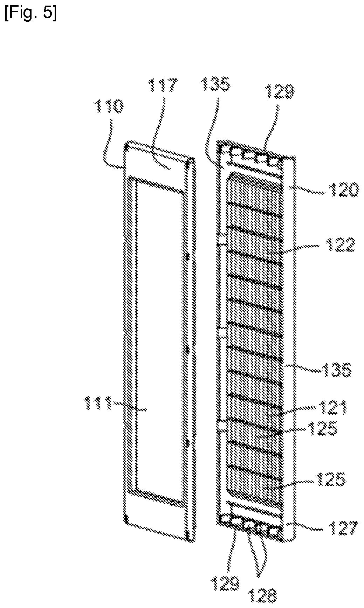

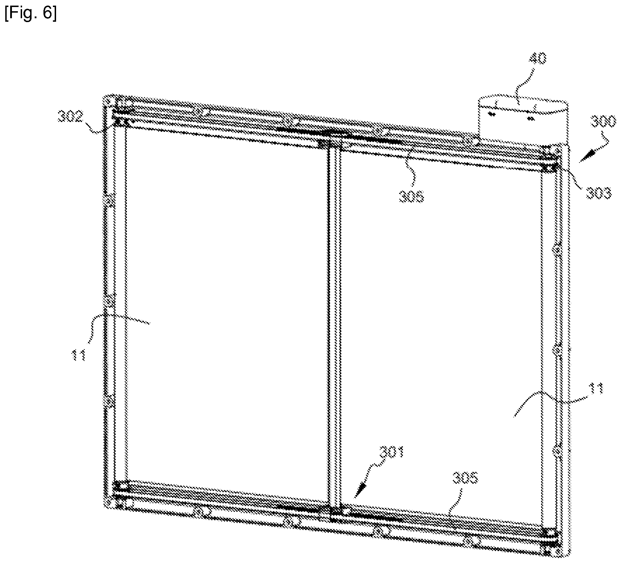

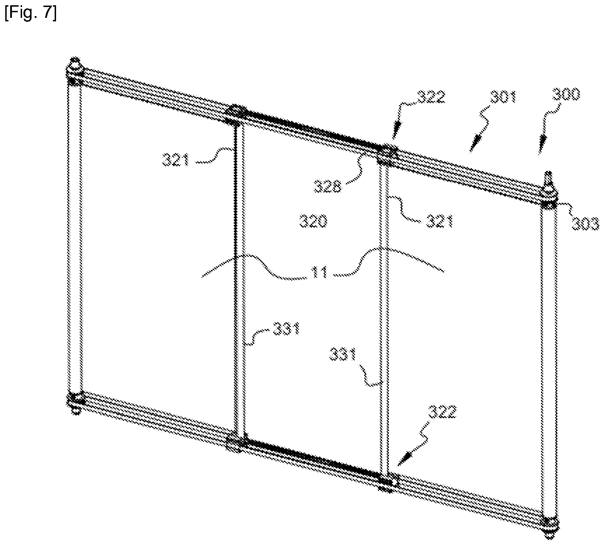

On a représenté sur les figures 5 à 7 un dispositif de régulation d'un flux d'air 300 selon un exemple de réalisation de l'invention, le dispositif 300 comprenant deux rideaux 11 aptes à se déplacer selon une direction d'ouverture/fermeture, entre une position fermée obturant le passage du flux d'air et une position ouverte laissant passer le flux d'air, ce dispositif de régulation comportant un système de transmission 301 agencé pour guider le mouvement desdits rideaux 11, ainsi qu'un actionneur 40 induisant un mouvement au système de transmission, ce système de transmission 301 comportant deux arbres d'enroulement 302 et 303 chacun pour l'enroulement et le déroulement de l'un des rideaux 11, ce système de transmission 301 comportant en outre au moins une courroie 305 actionnable en mouvement et agencée pour faire tourner l'un au moins des arbres d'enroulement à la fois dans le sens d'un enroulement du rideau et dans le sens d'un déroulement du rideau 11.

L'actionneur 40 est agencé pour faire tourner l'un des arbres d'enroulement, celui 303 sur les figures, sélectivement dans un sens d'enroulement du rideau ou dans un sens de déroulement du rideau 11.

Chaque arbre d'enroulement 302 et 303 comporte un pignon denté 310 agencé pour coopérer avec la courroie 305 qui est crantée de sorte que le mouvement de l'arbre d'enroulement 303, un mouvement provoqué par l'actionneur 40, soit transmis à l'autre arbre d'enroulement 302.

Le dispositif de régulation 300 comporte deux courroies 305 chacune à l'une des extrémités des deux arbres d'enroulement 302 et 303 de sorte que chaque courroie 305 est associée à deux pignons dentés 310 des deux arbres d'enroulement, ces deux courroies 305 étant agencées pour être en mouvement synchronisé l'une par rapport à l'autre.

Le dispositif 300 comporte un organe d'entraînement 320 solidaire d'un bord libre 321 du rideau 11 et agencé pour se déplacer en même temps que les deux courroies 305 pour accompagner le rideau 11 lors de son enroulement ou de son déroulement de manière à maintenir le rideau 11 à plat.

Chaque organe d'entrainement 320 comporte deux éléments de fixation 322 agencés pour être fixés aux deux courroies 305 de sorte que l'organe d'entrainement 320 soit solidaire des deux courroies 305.

Chaque élément de fixation 322 est pincé sur la courroie 305 associée, précisément pincé sur une bande 324 formant la courroie.

Pour chaque courroie, l'élément de fixation 322 associé à l'un des rideaux est fixé sur un premier brin 328 de la courroie entre les deux arbres d'enroulement 302 et 303 et l'autre élément de fixation associé à l'autre des rideaux est fixé sur un deuxième brin 329 de la courroie qui est opposé au premier brin de sorte que les deux éléments de fixation 322 puissent être déplacés en directions opposées, soit en s'éloignant l'un de l'autre soit en se rapprochant l'un de l'autre.

Chaque organe d'entrainement 320 comporte une tige 331 avec à chaque extrémité de la tige 331 l'un des éléments de fixation 322, et la tige 331 étant placée le long d'un bord libre 321 du rideau 11 associé. Notamment lorsque les deux rideaux 11 sont en positon fermée, les deux tiges 331 viennent en appui l'une contre l'autre. Les éléments de fixation 322 sont notamment fixés sur la courroie sans possibilité de mouvement relatif par rapport à cette courroie.

Les éléments de fixation 322 sont réalisés en matière plastique.

Ainsi pour ouvrir ou fermer le rideau, ce rideau 11 est entrainé à la fois par l'arbre d'enroulement et par l'organe d'entrainement, aux deux extrémités. L'action simultanée aux deux extrémités du rideau permet de maintenir ce rideau tendu comme souhaité, évitant ainsi des fronces ou plis et d'éventuels coincements du rideau. L'invention permet ainsi de s'affranchir, de manière avantageuse, d'un ressort de rappel qui pourrait être volumineux et devoir consommer une partie du couple développé par l'actionneur. L'invention permet en outre de transmettre de manière uniforme le couple de l'actionneur aux deux arbres d'enroulement des deux rideaux 11. Lors de l'ouverture du rideau, le rideau s'enroule autour de son arbre d'enroulement 302 et 303 et le mouvement de la courroie ramène l'extrémité libre du rideau vers cet arbre d'enroulement via l'organe d'entrainement.

Selon l'un des aspects de l'invention, le sens pour enrouler le rideau 11 autour de l'arbre d'enroulement est le même sur les deux arbres. Ceci est permis par le fait que les rideaux s'enroulent de façon opposée sur les deux arbres

Ainsi les courroies 305 permettent la rotation de l'un des arbres d'enroulement simultanément à la mise en mouvement en translation de l'organe d'entrainement 322 du rideau via les éléments de fixation.

L'arbre 303 coopère avec l'actionneur 40 via une patte de coopération 340. 1

## Revendications

1. Dispositif de régulation (300) d'un flux d'air (F) destiné à circuler à travers un échangeur de chaleur pour véhicule automobile, le dispositif comprenant deux rideaux (11) aptes à se déplacer selon une direction d'ouverture/fermeture (Z), entre une position fermée (PF) obturant le passage du flux d'air (F) et une position ouverte (PO) laissant passer le flux d'air (F), ce dispositif de régulation comportant un système de transmission (301) agencé pour guider le mouvement desdits rideaux, ainsi qu'un actionneur (40) induisant un mouvement au système de transmission, ce système de transmission comportant deux arbres d'enroulement chacun pour l'enroulement et le déroulement de l'un des rideaux, ce système de transmission comportant en outre au moins une courroie (305) actionnable en mouvement et agencée pour faire tourner l'un au moins des arbres d'enroulement (302 ; 303) à la fois dans le sens d'un enroulement du rideau et dans le sens d'un déroulement du rideau, **caractérisé en ce que** chaque arbre d'enroulement comporte un pignon denté (310) agencé pour coopérer avec la courroie qui est crantée de sorte que le mouvement de l'un des arbres d'enroulement, notamment un mouvement provoqué par l'actionneur, soit transmis à l'autre arbre d'enroulement..

2. Dispositif selon la revendication précédente, dans lequel l'actionneur (40) est agencé pour faire tourner l'un des arbres d'enroulement (303) sélectivement dans un sens d'enroulement du rideau ou dans un sens de déroulement du rideau.

3. Dispositif selon l'une des revendications précédentes, dans lequel le dispositif de régulation comporte deux courroies (305) chacune à l'une des extrémités des deux arbres d'enroulement (302 ; 303) de sorte que chaque courroie est associée à deux pignons dentés des deux arbres d'enroulement, ces deux courroies étant agencées pour être en mouvement synchronisé l'une par rapport à l'autre.

4. Dispositif selon l'une des revendications précédentes, dans lequel le dispositif comporte au moins un organe d'entraînement (320) solidaire d'un bord libre du rideau et agencé pour se déplacer en même temps que la courroie pour accompagner le rideau lors de son enroulement ou de son déroulement de manière à maintenir le rideau à plat.

5. Dispositif selon la revendication précédente, dans lequel l'organe d'entrainement (320) comporte des éléments de fixation (322) agencés pour être fixés aux courroies de sorte que l'organe d'entrainement soit solidaire des deux courroies.

6. Dispositif selon la revendication précédente, dans lequel chaque élément de fixation (322) est pincé sur la courroie associée, notamment pincé sur une bande formant la courroie.

7. Dispositif selon l'une des revendications précédentes, dans lequel, pour chaque courroie, l'élément de fixation associé à l'un des rideaux est fixé sur un premier brin (328) de la courroie entre les deux arbres d'enroulement et l'autre élément de fixation associé à l'autre des rideaux est fixé sur un deuxième brin (329) de la courroie qui est opposé au premier brin de sorte que les deux éléments de fixation puissent être déplacés en directions opposées, soit en s'éloignant l'un de l'autre soit en se rapprochant l'un de l'autre.

8. Dispositif selon l'une des trois revendications précédentes, dans lequel l'organe d'entrainement (320) comporte une tige 331) avec à chaque extrémité de la tige l'un des éléments de fixation, et la tige étant placée le long d'un bord libre (321) du rideau associé.

9. Procédé pour ouvrir ou fermer le rideau d'un dispositif selon l'une des revendications précédentes, ce rideau (11) est entrainé à la fois par l'arbre d'enroulement et par l'organe d'entrainement, respectivement aux deux extrémités, notamment sans intervention d'un ressort de rappel supplémentaire.

## Patentansprüche

1. Vorrichtung (300) zur Regelung eines Luftstroms (F), der dazu bestimmt ist, durch einen Wärmetauscher hindurch zu zirkulieren, für ein Kraftfahrzeug, wobei die Vorrichtung zwei Rollos (11) aufweist, die geeignet sind, sich entlang einer Öffnungs-/Schließrichtung (Z), zwischen einer geschlossenen Stellung (PF), die den Durchgang des Luftstroms (F) verschließt, und einer geöffneten Stellung (PO), die den Luftstrom (F) durchlässt, zu verlagern, wobei diese Vorrichtung zur Regelung ein Antriebssystem (301), das dazu eingerichtet ist, die Bewegung der Rollos zu führen, sowie einen Aktor (40), der eine Bewegung des Antriebssystems bewirkt, umfasst, wobei dieses Antriebssystem zwei Wickelwellen umfasst, jede zum Aufwickeln und zum Abwickeln eines der Rollos, wobei dieses Antriebssystem ferner mindestens einen Riemen (305) umfasst, der in Bewegung versetzbar ist und dazu eingerichtet ist, mindestens eine der Wickelwellen (302; 303) sowohl in die Richtung eines Aufwickelns des Rollos als auch in die Richtung eines Abwickelns des Rollos drehen zu lassen, **dadurch gekennzeichnet, dass** jede Wickelwelle ein Zahnrad (310) umfasst, das dazu eingerichtet ist, mit dem Riemen zusammenzuwirken, der formgezahnt ist, so dass die Bewegung der einen der Wickelwellen, insbesondere eine von dem Aktor ausgelöste Bewegung, auf die andere Wickelwelle übertragen wird.

2. Vorrichtung nach dem vorhergehenden Anspruch, wobei der Aktor (40) dazu eingerichtet ist, die eine der Wickelwellen (303) selektiv in eine Aufwickelrichtung des Rollos oder in eine Abwickelrichtung des Rollos drehen zu lassen.

3. Vorrichtung nach einem der vorhergehenden Ansprüche, wobei die Vorrichtung zur Regelung zwei Riemen (305) umfasst, jeden an einem der Enden der beiden Wickelwellen (302; 303), so dass jeder Riemen zwei Zahnrädern der beiden Wickelwellen zugeordnet ist, wobei diese beiden Riemen dazu eingerichtet sind, zueinander synchronisiert in Bewegung zu sein.

4. Vorrichtung nach einem der vorhergehenden Ansprüche, wobei die Vorrichtung mindestens ein Mitnahmeorgan (320) umfasst, das mit einem freien Rand des Rollos fest verbunden ist und dazu eingerichtet ist, sich gleichzeitig mit dem Riemen zu verlagern, um das Rollo bei seinem Aufwickeln oder seinem Abwickeln zu begleiten, so dass das Rollo flach gehalten wird.

5. Vorrichtung nach dem vorhergehenden Anspruch, wobei das Mitnahmeorgan (320) Befestigungselemente (322) umfasst, die dazu eingerichtet sind, an den Riemen befestigt zu werden, so dass das Mitnahmeorgan mit den beiden Riemen fest verbunden ist.

6. Vorrichtung nach dem vorhergehenden Anspruch, wobei das Befestigungselement (322) an den zugeordneten Riemen geklemmt ist, insbesondere an einen den Riemen bildenden Streifen geklemmt ist.

7. Vorrichtung nach einem der vorhergehenden Ansprüche, wobei, bei jedem Riemen, das einem der Rollos zugeordnete Befestigungselement an einem ersten Trum (328) des Riemens zwischen den beiden Wickelwellen befestigt ist und das dem anderen der Rollos zugeordnete Befestigungselement an einem zweiten Trum (329) des Riemens befestigt ist, das zu dem ersten Trum entgegengesetzt ist, so dass die beiden Befestigungselemente in entgegengesetzte Richtungen verlagert werden können, entweder voneinander weg oder zueinander hin.

8. Vorrichtung nach einem der drei vorhergehenden Ansprüche, wobei das Mitnahmeorgan (320) einen Stab (331) mit einem der Befestigungselemente an jedem Ende des Stabs umfasst und wobei der Stab entlang eines freien Rands (321) des zugeordneten Rollos angeordnet ist.

9. Verfahren zum Öffnen oder Schließen des Rollos einer Vorrichtung nach einem der vorhergehenden Ansprüche, wobei dieses Rollo (11) sowohl von der Wickelwelle als auch von dem Mitnahmeorgan, an den beiden Enden, mitgenommen wird, insbesondere ohne Mitwirkung einer zusätzlichen Rückstellfeder.

## Claims

1. Device (300) for regulating an air flow (F) intended to circulate through a heat exchanger for a motor vehicle, the device comprising two curtains (11) that are able to move in an opening/closing direction (Z), between a closed position (PF) obstructing the passage of the air flow (F) and an open position (PO) letting the air flow (F) pass, this regulating device having a transmission system (301) arranged to guide the movement of said curtains, and an actuator (40) causing the transmission system to move, this transmission system having two winding shafts, each for the winding and unwinding of one of the curtains, this transmission system also having at least one belt (305) that can be actuated to move and is arranged to rotate at least one of the winding shafts (302; 303) both in the direction of winding of the curtain and in the direction of unwinding of the curtain, **characterized in that** each winding shaft has a toothed pinion (310) arranged to cooperate with the belt, which is notched, such that the movement of one of the winding shafts, in particular a movement caused by the actuator, is transmitted to the other winding shaft.

2. Device according to the preceding claim, wherein the actuator (40) is arranged to rotate one of the winding shafts (303) selectively in a direction of winding of the curtain or in a direction of unwinding of the curtain.

3. Device according to either of the preceding claims, wherein the regulating device has two belts (305), each at one of the ends of the two winding shafts (302; 303), such that each belt is associated with two toothed pinions of the two winding shafts, these two belts being arranged so as to move synchronously relative to one another.

4. Device according to one of the preceding claims, wherein the device has at least one drive member (320) secured to a free edge of the curtain and arranged to move at the same time as the belt in order to accompany the curtain during its winding or unwinding, so as to keep the curtain flat.

5. Device according to the preceding claim, wherein the drive member (320) has fastening elements (322) arranged to be fastened to the belts such that the drive member is secured to the two belts.

6. Device according to the preceding claim, wherein each fastening element (322) is clip-fastened onto the associated belt, in particular clip-fastened onto a strip forming the belt.

7. Device according to one of the preceding claims, wherein, for each belt, the fastening element associated with one of the curtains is fastened to a first strand (328) of the belt between the two winding shafts and the other fastening element, which is associated with the other of the curtains, is fastened to a second strand (329) of the belt that is opposite the first strand, such that the two fastening elements can be moved in opposite directions, either moving away from one another or moving closer to one another.

8. Device according to one of the three preceding claims, wherein the drive member (320) has a rod (331) with one of the fastening elements at each end of the rod, the rod being placed along a free edge (321) of the associated curtain.

9. Method for opening or closing the curtain of a device according to one of the preceding claims, this curtain (11) being driven both by the winding shaft and by the drive member, respectively at the two ends, in particular without the intervention of an additional return spring.
